# EUROPEAN PATENT APPLICATION

(11) **EP 4 694 498 A1**
(43) Date of publication of application: **11.02.2026**
(21) Application number: 24781119.3
(22) Date of filing: 21.03.2024
(51) Int. Cl.: H04W 72/25, H04W 72/04, H04W 72/542, H04W 72/563, H04W 72/02, H04W 92/18

(54) **METHOD AND APPARATUS FOR BEAM-BASED RESOURCE POOL SELECTION AND GRANT GENERATION OPERATION**

(30) Priority: 24.03.2023 KR 20230038829; 16.04.2023 US 202363459692 P
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Frenkel, Matthias Alexander
(86) International application number: PCT/KR2024/003561
(87) International publication number: WO 2024/205128

(57) **Abstract**

Provided are a method by which a first device performs wireless communication and an apparatus supporting same. The method may comprise the steps of: acquiring information associated with at least one beam for which a beam failure has been detected; determining a set of candidate resources on a resource pool excluding, from among a plurality of resource pools, at least one resource pool associated with the at least one beam for which the beam failure has been detected; and generating a grant on the basis of information associated with the set of candidate resources. For example, the information associated with the at least one beam for which the beam failure has been detected may be transmitted from a lower layer of the first device to a higher layer of the first device.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

In one embodiment, provided is a non-transitory computer-readable storage medium recording instructions. For example, the instructions, based on being executed, cause a first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows a method of selecting resource pool and creating grant based on beam, based on an embodiment of the present disclosure.
FIG. 10 shows a method of selecting resource pool and creating grant based on beam, based on an embodiment of the present disclosure.
FIG. 11 shows a method for performing wireless communication by a first device, based on an embodiment of the present disclosure.
FIG. 12 shows a method for performing wireless communication by a second device, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

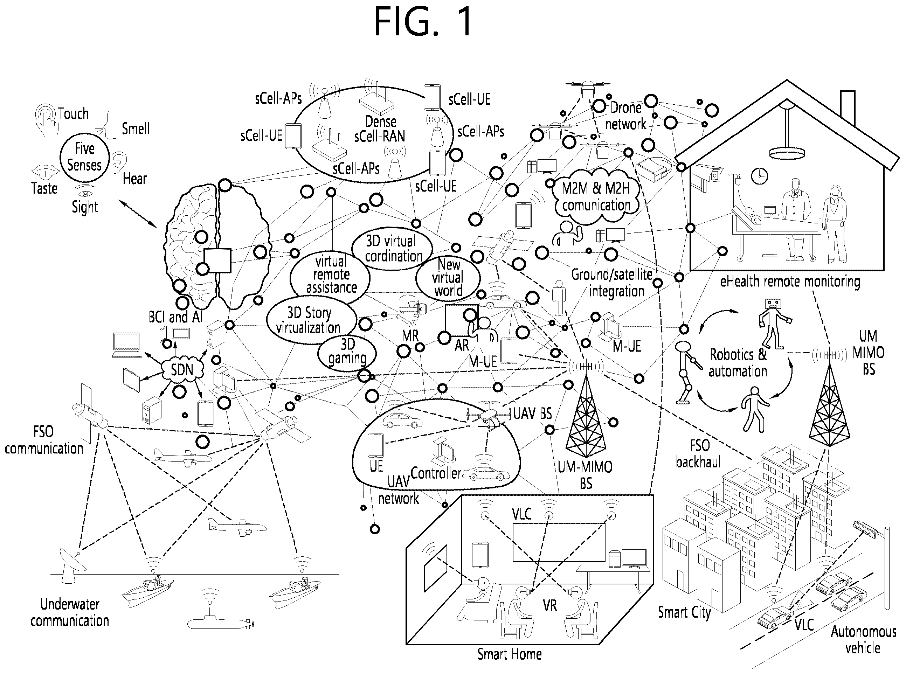

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

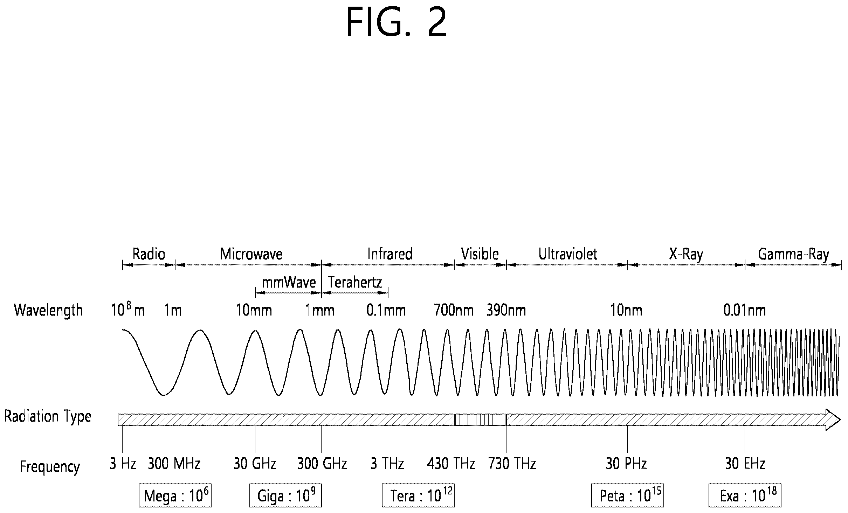

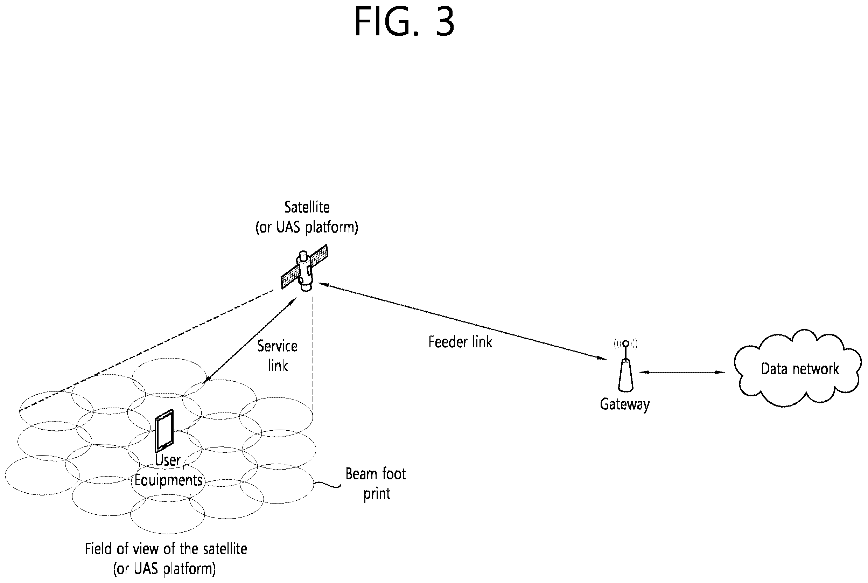

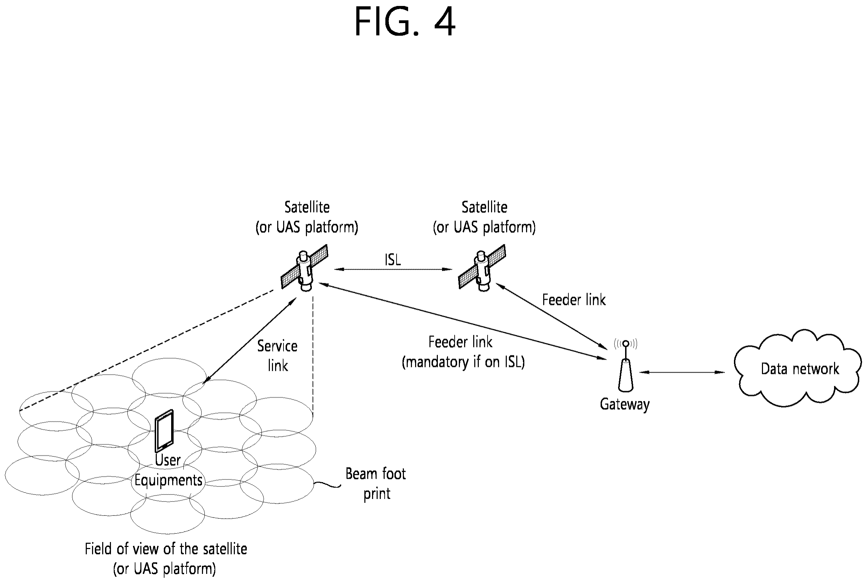

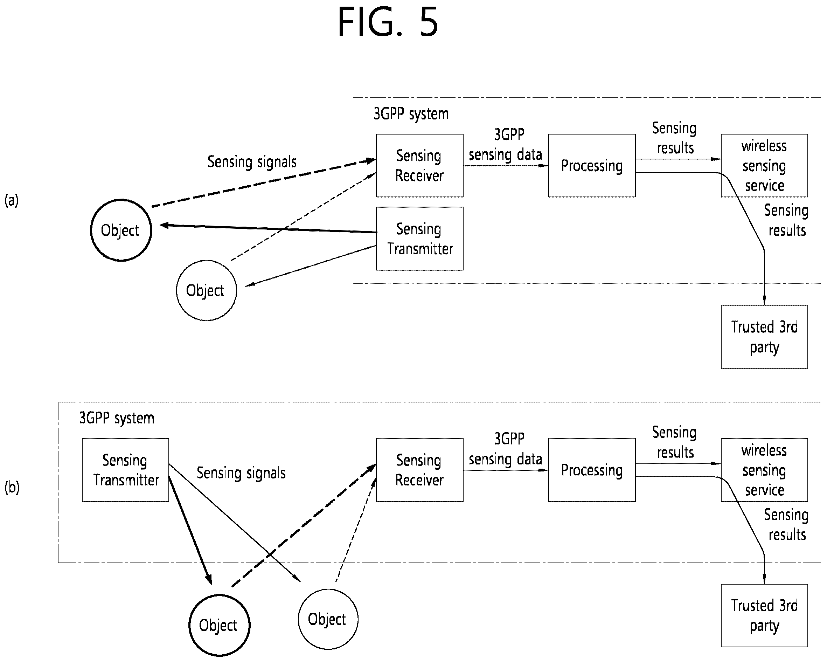

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

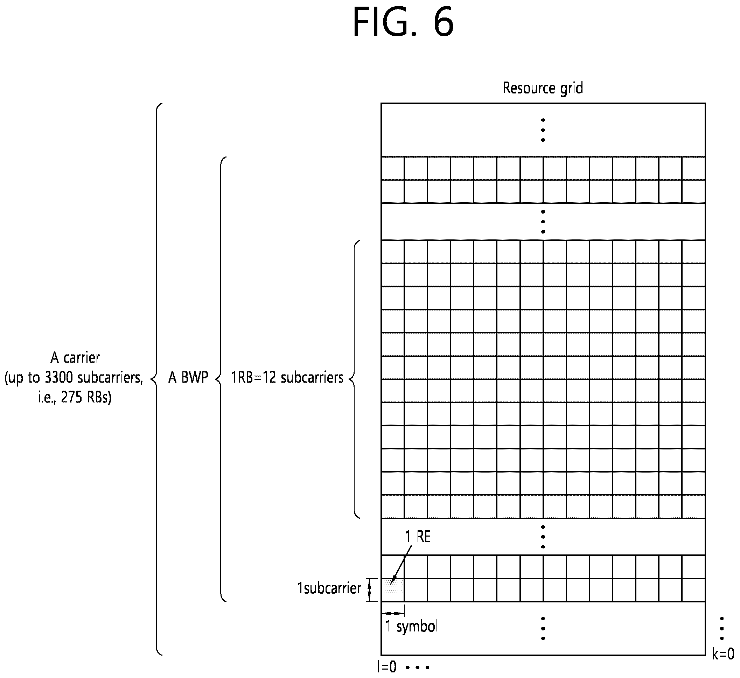

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

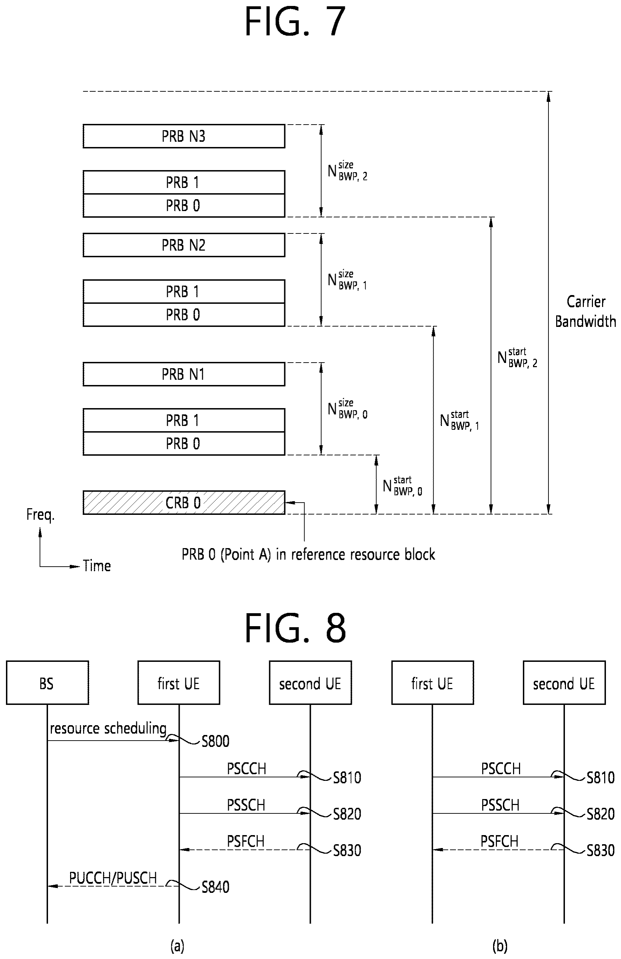

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in conventional NR Uu (e.g., operations between a base station and a UE), beam management operations (e.g., beam scheduling, beam selection, beam failure recovery) in mmWave frequencies have been newly introduced. For example, the UE may perform SL FR2 (sidelink communication based on sidelink mmWave frequencies) operations based on the following operations.
- Beam sweeping operation: an operation in which the UE covers a spatial domain using transmission and/or reception beams during certain time interval according to a predefined scheme
- Beam measurement operation: an operation in which the UE measures a reference signal (RS) transmitted by a counterpart UE and searches for an RS whose measurement value is equal to or greater than a threshold
- Beam selection operation: an operation in which the UE selects a best beam (e.g., reception beam or transmission beam) based on the result of beam measurement
- Beam reporting operation: an operation in which the UE reports the selected best beam to the counterpart UE or base station
- Beam pairing: an operation to pair the transmission/reception beams between UEs to enable communication through the transmission/reception beams between UEs

Meanwhile, according to the prior art, a UE may determine a set of candidate resources by performing decoding of control information (e.g., sidelink control information) received from another UE and reference signal received power (RSRP) measurement on a sensing window and a selection window, and may randomly select a transmission resource among the set of candidate resources. However, in beam-based communication of FR2, when the UE performs beam pairing with a counterpart UE based on a beam selected by the UE but a beam failure is detected in the paired beam, transmission of data, etc. based on the beam may not be possible until the UE and the counterpart UE complete a recovery procedure (e.g., beam failure recovery (BFR)) for the beam in which the beam failure is detected. In addition, even when a set of candidate resources is determined by performing RSRP measurement on a specific resource pool and a transmission resource is selected from the set of candidate resources, if a beam failure is detected in a specific beam capable of performing transmission based on the specific resource pool, a problem may occur in that the selected transmission resource cannot be used. That is, for example, when information related to beam failure is not considered in addition to RSRP measurement information in the resource selection procedure, sensing (or measurement) procedures for a resource pool related to the beam in which the beam failure is detected may be unnecessarily performed. Alternatively, for example, since resources of a resource pool related to the beam in which the beam failure is detected may be included in information related to the set of candidate resources transferred from the PHY layer to the MAC layer of the UE for resource selection, the reliability of the information related to the set of candidate resources may be degraded (i.e., for example, the reliability related to the selected resource may not be ensured). Alternatively, for example, unnecessary operations may be performed so that the power of the UE may be inefficiently consumed.

In the present disclosure, a method of selecting a sidelink resource pool and creating a sidelink grant for FR2 operation in NR V2X, and a device supporting the same, is proposed as follows.

For example, the medium access control (MAC) layer of a transmission UE may select a sidelink resource pool to be used when transmitting or receiving sidelink data (e.g., PSCCH, PSSCH, or PSFCH), and may transfer information on the selected sidelink resource pool to the physical (PHY) layer. For example, the PHY layer of the transmission UE may report to the MAC layer an idle resource set (e.g., a set of candidate resources) among the resources of the resource pool, based on the sidelink resource pool information transferred from the MAC layer. In this case, for example, when the PHY layer transfers the idle resource set to the MAC layer, the PHY layer may select an idle resource set among resources for which a block error rate (BLER) is less than or equal to a threshold (or a signal to interference plus noise ratio (SINR) is greater than or equal to a threshold, or a reference signal received power (RSRP)/reference signal received quality (RSRQ) is greater than or equal to a threshold, or a received signal strength indicator (RSSI) is less than or equal to a threshold), and report the idle resource set to the MAC layer. For example, the MAC layer may create a sidelink grant by selecting a resource among the idle resource set received from the PHY layer.

For example, the PHY layer of the transmission UE may report to the MAC layer beam information for which a BLER is greater than or equal to a threshold (or an SINR is less than or equal to a threshold, or an RSRP/RSRQ is less than or equal to a threshold, or an RSSI is greater than or equal to a threshold). In addition, for example, resources related to a beam reference signal (RS) may share sidelink resources (e.g., a sidelink resource pool) and a resource configuration (or resource). For example, when the MAC layer of the transmission UE receives from the PHY layer beam information for which a BLER is greater than or equal to a threshold (or an SINR is less than or equal to a threshold, or an RSRP/RSRQ is less than or equal to a threshold, or an RSSI is greater than or equal to a threshold), the MAC layer may exclude a sidelink resource pool sharing resources for the beam (or beam RS), and may select a sidelink resource pool to be used for transmitting/receiving sidelink data (e.g., PSCCH, PSSCH, or PSFCH) among remaining sidelink resource pools, and may transfer information on the selected sidelink resource pool to the PHY layer. For example, the PHY layer of the transmission UE may report to the MAC layer an idle resource set (e.g., a set of candidate resources) among resources of the resource pool, based on the sidelink resource pool information transferred from the MAC layer. For example, the MAC layer may create a sidelink grant by selecting a resource among the idle resource set received from the PHY layer.

For example, when a plurality of beams paired with counterpart UE(s) exist, the MAC layer of the UE may transfer to the PHY layer assistance information (e.g., transmission parameters, beam-related information, and resource pool information). In addition, for example, the MAC layer may receive, from the PHY layer, candidate resource information for sidelink resource selection through the following procedure.

For example, the MAC layer of the transmission UE may simultaneously deliver, to the PHY layer, TX parameters related to a plurality of TX beams (e.g., sidelink priority, remaining packet delay budget (PDB), the number of subchannels, etc.), and the PHY layer may independently report to the MAC layer TX beam-specific selectable candidate resources (e.g., a set of candidate resources) by using the TX parameters related to each TX beam.

For example, the MAC layer of the transmission UE may deliver, to the PHY layer, one representative TX parameter considering TX parameters related to a plurality of TX beams (e.g., sidelink priority, remaining packet delay budget (PDB), the number of subchannels, etc.), and the PHY layer may independently report to the MAC layer TX beam-specific selectable candidate resources (e.g., a set of candidate resources) by using this, or may report to the MAC layer selectable candidate resources (e.g., a set of candidate resources) derived based on a sensing beam covering the plurality of TX beams.

For example, the MAC layer of the transmission UE may deliver, to the PHY layer, a TX parameter related to a specific TX beam (e.g., sidelink priority, remaining packet delay budget (PDB), the number of subchannels, etc.), and the PHY layer may report to the MAC layer selectable candidate resources (e.g., a set of candidate resources) derived based on sensing covering the corresponding TX beam by using the TX parameter, and this procedure may be repeatedly performed for a plurality of beams.

For example, in the embodiment of the present disclosure described above, the transmission UE may create one sidelink grant, or may create a plurality of TX beam-specific sidelink grants.

For example, in the embodiment of the present disclosure described above, parameters related to a plurality of TX beams (e.g., sidelink priority, remaining packet delay budget (PDB), the number of subchannels, etc.) may target the same sidelink transport block (TB), or may target a plurality of different sidelink TBs.

For example, in the embodiment of the present disclosure described above, when parameters related to a plurality of TX beams (e.g., sidelink priority, remaining packet delay budget (PDB), the number of subchannels, etc.) target different sidelink TBs, or when a plurality of TX beams have different sidelink priorities, generation of selectable candidate resources or selection of transmission resources among selectable candidate resources of the transmission UE may be preferentially performed for a sidelink TB or TX beam having a relatively higher sidelink priority.

For example, when a physical sidelink feedback channel (PSFCH) is used for beam pairing, beam maintenance, or sidelink (SL) beam failure recovery (BFR), such PSFCH resources may be (pre-)configured outside the sidelink resource pool. In addition, for example, when the UE performs the beam management operation of the proposal(s) of the present disclosure described above based on PSFCH, when configuring a resource pool for creating a sidelink grant, the UE may select a sidelink resource pool in which PSFCH resources for the corresponding purpose (e.g., beam management, beam pairing, or BFR) are configured (e.g., this may also be applied when creating a sidelink grant related to HARQ feedback disabled packet transmission).

The sidelink grant creation and (re)selection operation of the present disclosure may be applied when available data is generated in a logical channel and immediately before a MAC PDU is generated. Alternatively, the sidelink grant creation and (re)selection operation of the present disclosure may be equally applied after available data is generated in a logical channel and a MAC PDU is generated.

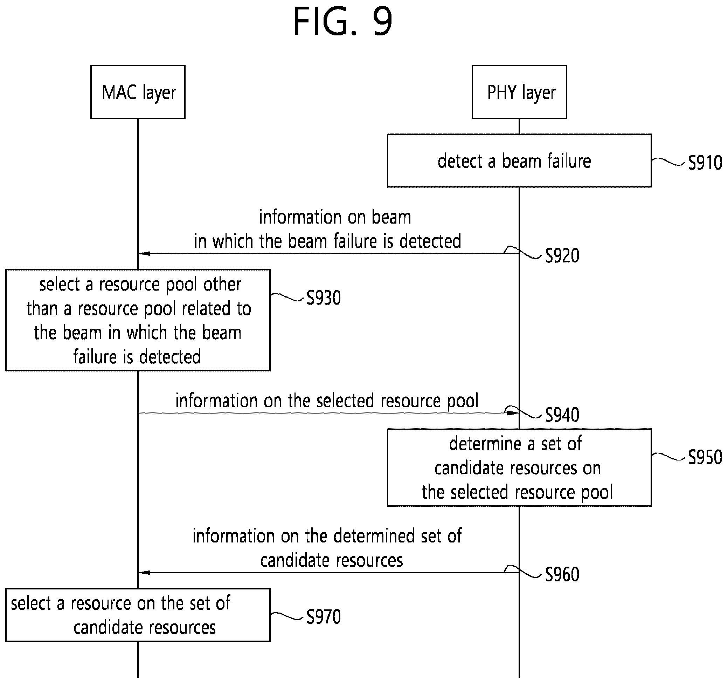

FIG. 9 shows a method of selecting resource pool and creating grant based on beam, based on an embodiment of the present disclosure.

Referring to FIG. 9, in step S910, the physical (PHY) layer of the UE (e.g., the transmission UE) may detect a beam failure. For example, when the UE performs a plurality of beam pairings with counterpart UE(s) based on a plurality of beams, the UE may detect a beam failure for each of the paired beams. In step S920, the PHY layer of the UE may transfer information on the beam in which the beam failure is detected to the medium access control (MAC) layer of the UE. For example, the information on the beam in which the beam failure is detected may include information related to at least one of an index of the beam in which the beam failure is detected or an index of a resource for a beam reference signal (RS) of the beam in which the beam failure is detected. In step S930, the MAC layer of the UE may identify a resource pool related to the beam in which the beam failure is detected, based on the information on the beam in which the beam failure is detected transferred from the PHY layer. For example, when the UE performs a plurality of beam pairings based on a plurality of beams and an available resource pool for each of the plurality of beams is configured, the MAC layer may exclude the resource pool related to the beam in which the beam failure is detected among the resource pools configured for the plurality of beams. That is, for example, the MAC layer of the UE may select a resource pool other than the resource pool related to the beam in which the beam failure is detected, based on the information on the beam in which the beam failure is detected transferred from the PHY layer. In step S940, the MAC layer of the UE may transfer to the PHY layer information on the selected resource pool. For example, the information on the selected resource pool may include information on the resource pool excluding the resource pool related to the beam in which the beam failure is detected, which is transferred by the PHY layer to the MAC layer. In step S950, the PHY layer of the UE may determine a candidate resource set based on the information on the selected resource pool transferred from the MAC layer. For example, the PHY layer may determine the candidate resource set by performing sensing and measuring RSRP on the selected resource pool. In step S960, the PHY layer of the UE may transfer to the MAC layer information on the candidate resource set. In step S970, the MAC layer of the UE may randomly select (or create) a resource (or grant) among the candidate resource set transferred from the PHY layer. In this case, for example, the resource (e.g., transmission resource) selected by the UE may be included in a resource pool excluding the resource pool related to the beam in which the beam failure is detected. For example, since sensing may be performed only for a resource capable of transmission through the beam, a resource may be selected so that the efficiency of the resource selection operation may be improved. For example, transmission using the selected resource may not fail due to a beam failure.

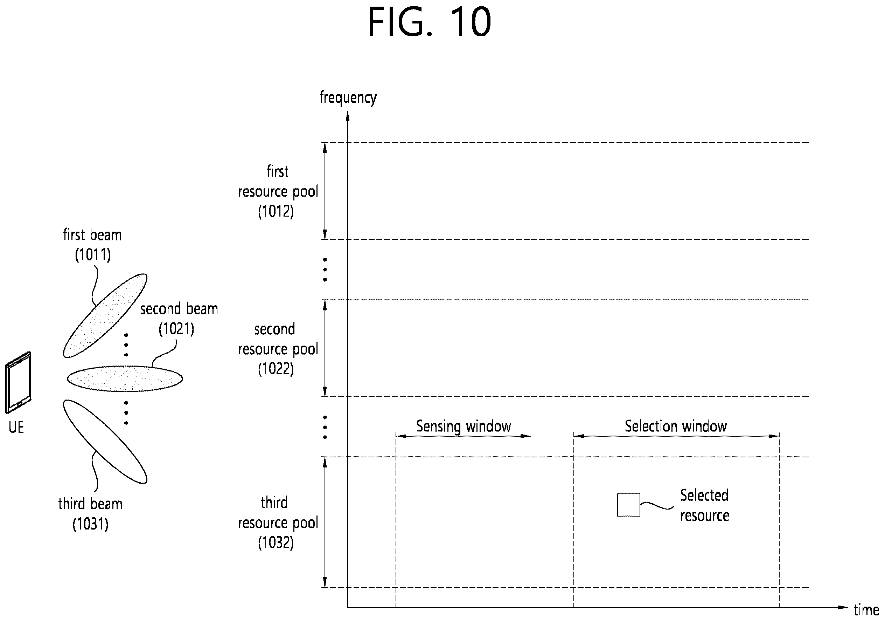

FIG. 10 shows a method of selecting resource pool and creating grant based on beam, based on an embodiment of the present disclosure.

Referring to FIG. 10, the UE may perform beam pairing based on a plurality of beams. For example, the UE may perform a first beam pairing based on a first beam 1011, may perform a second beam pairing based on a second beam 1021, and may perform a third beam pairing based on a third beam 1031. For example, an available resource pool for each beam may be configured. For example, a first resource pool 1012 may be used based on the first beam 1011, a second resource pool 1022 may be used based on the second beam 1021, and a third resource pool 1032 may be used based on the third beam 1031. Meanwhile, in the embodiment of FIG. 10, for convenience of explanation, it is illustrated that the resource pools configured for each beam are allocated in a frequency division multiplexing (FDM) manner, but the same may be applied even when the resource pools configured for each beam are allocated in a time division multiplexing (TDM) manner. For example, the UE may perform a beam failure detection operation for paired beams, and may determine a beam failure of the corresponding beam based on detecting beam failures a threshold number of times for the paired beams. For example, the UE may determine a beam failure of the first beam 1011 based on detecting beam failures a threshold number of times for the first beam 1011, and the UE may determine a beam failure of the second beam 1021 based on detecting beam failures a threshold number of times for the second beam 1021. For example, information on the first beam 1011 and the second beam 1021 in which the beam failure is determined (or detected) may be transferred from the PHY layer of the UE to the MAC layer of the UE. For example, the MAC layer of the UE may identify the first resource pool 1012 related to the first beam 1011 in which the beam failure is detected, and may identify the second resource pool 1022 related to the second beam 1021 in which the beam failure is detected. For example, the MAC layer of the UE may transfer to the PHY layer information on the third resource pool 1032 other than the first resource pool 1012 and the second resource pool 1022. For example, the PHY layer of the UE may perform sensing and RSRP measurement on the third resource pool 1032 related to the third beam 1031 in which the beam failure is not detected. For example, the PHY layer of the UE may determine an idle resource set (e.g., a set of candidate resources) based on the sensing and the RSRP measurement on the third resource pool 1032. For example, the MAC layer of the UE may select a transmission resource among the idle resource set (e.g., a set of candidate resources) transferred from the PHY layer. Alternatively, for example, the MAC layer of the UE may create a grant based on the information related to the idle resource set (e.g., a set of candidate resources) transferred from the PHY layer.

Meanwhile, when the UE detects a failure for a beam used for sidelink communication a threshold number of times (or when the MAC layer of the UE receives a beam failure instance (BFI) greater than or equal to the threshold from the PHY layer), (the MAC layer of the UE) may trigger a sidelink (SL) beam failure recovery (BFR) procedure to perform a procedure for recovering the beam.

For example, when sidelink (SL) beam failure recovery (BFR) is triggered (e.g., when the UE itself also has the BFR procedure triggered when receiving a BFR MAC CE from a counterpart UE, or when the UE triggers BFR based on reference signal (RS) measurement), the UE may report to the counterpart UE the following information (e.g., SL BFR MAC CE) through SCI, MAC CE, or a PC5 RRC message.
- Information related to a unicast (UC) link in which beam failure detection (BFD) occurs or beam failure recovery (BFR) is triggered (source layer 2 ID, destination layer 2 ID, or PC5 link identifier)
- Information related to a beam in which BFD occurs or BFR is triggered (e.g., beam index, sidelink resource pool index related to the beam index, sidelink resource block (RB) set index related to the beam index, or reference signal (RS) index where the beam failure occurs)
- A cause of beam failure detection (BFD) or a cause of beam failure recovery (BFR) (e.g., a cause for informing that BFD or BFR has occurred)
- A measurement value measured at a reference signal (RS) in which the beam failure occurs (or the RS itself)
- The number of beams used for sidelink communication with the counterpart UE, and beam indexes used for sidelink communication with the counterpart UE
- Measurement value measured at reference signal (RS) related to beam index used for sidelink communication with the counterpart UE
- When a sidelink beam and a RS related to the sidelink beam are linked (or mapped) with a specific sidelink resource pool (or RB set), information on a beam index or a RS index linked with the sidelink resource pool (or RB set)
- Information on a sidelink resource pool (or sidelink resource pool index) or RB set (or RB set index) in which interference is relatively less measured after sensing is performed on a specific beam

For example, when the UE triggers sidelink (SL) beam failure recovery (BFR) (e.g., when the BFR procedure of the UE itself is triggered when receiving a BFR MAC CE from a counterpart UE, or when the UE triggers BFR based on reference signal (RS) measurement), the UE may report to the base station the following information (e.g., a BFR MAC CE for indicating SL BFR) (through a MAC CE or an RRC message (e.g., SL UE information)).
- Information related to a unicast (UC) link in which beam failure detection (BFD) occurs or beam failure recovery (BFR) is triggered (source layer 2 ID, destination layer 2 ID, or PC5 link identifier)
- Information related to a beam in which BFD occurs or BFR is triggered (e.g., beam index, sidelink resource pool index related to the beam index, sidelink resource block (RB) set index related to the beam index, or reference signal (RS) index where the beam failure occurs)
- A cause of beam failure detection (BFD) or a cause of beam failure recovery (BFR) (e.g., a cause for informing that BFD or BFR has occurred)
- A measurement value measured at a reference signal (RS) in which the beam failure occurs (or the RS itself)
- The number of beams used for sidelink communication with the counterpart UE, and beam indexes used for sidelink communication with the counterpart UE
- Measurement value measured at reference signal (RS) related to beam indexe used for sidelink communication with the counterpart UE
- When a sidelink beam and a RS related to the sidelink beam are linked (or mapped) with a specific sidelink resource pool (or RB set), information on a beam index or a RS index linked with the sidelink resource pool (or RB set)
- Information on a sidelink resource pool (or sidelink resource pool index) or RB set (or RB set index) in which interference is relatively less measured after sensing is performed on a specific beam

For example, for the logical channel prioritization (LCP) operation of a MAC entity for an SL BFR MAC CE, the LCP priority order of the SL BFR MAC CE may be defined as follows.

For example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL BFR MAC CE
(4) Inter-UE Coordination (IUC) MAC CE (alternatively, the priority order of the IUC MAC CE may be the same as the SL CSI reporting MAC CE and may be higher than the priority order of the SL DRX command MAC CE.)
(5) Inter-UE Coordination (IUC) request MAC CE (e.g., MAC CE transmitted to request IUC MAC CE)
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL BFR MAC CE (i.e., it may have a priority order higher than the next to SCCH.)
(3) SL channel state information (CSI) reporting MAC CE
(4) Inter-UE Coordination (IUC) request MAC CE
(5) Inter-UE Coordination (IUC) MAC CE
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL BFR MAC CE
(3) Inter-UE Coordination (IUC) MAC CE message
(4) Inter-UE Coordination (IUC) request MAC CE
(5) SL channel state information (CSI) reporting MAC CE
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) Inter-UE Coordination (IUC) request MAC CE
(3) Inter-UE Coordination (IUC) MAC CE message
(4) SL BFR MAC CE
(5) SL channel state information (CSI) reporting MAC CE
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE = SL BFR MAC CE
(3) SL DRX Command MAC CE
(4) Inter-UE Coordination (IUC) MAC CE (alternatively, the priority order of IUC MAC CE may be the same as SL DRX Command MAC CE.)
(5) Inter-UE Coordination (IUC) request MAC CE
(6) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) Inter-UE Coordination (IUC) request MAC CE = SL BFR MAC CE
(5) Inter-UE Coordination (IUC) MAC CE (alternatively, the priority order of IUC MAC CE may be the same as STCH) = SL BFR MAC CE
(6) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) data of any sidelink traffic channel (STCH) (e.g., sidelink (SL) user data)
(5) Inter-UE Coordination (IUC) MAC CE
(6) Inter-UE Coordination (IUC) request MAC CE
(7) SL BFR MAC CE

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) SL BFR MAC CE
(5) data of any sidelink traffic channel (STCH) (e.g., sidelink (SL) user data)
(6) Inter-UE Coordination (IUC) request MAC CE
(7) Inter-UE Coordination (IUC) MAC CE

Alternatively, for example, the sidelink priority of the SL BFR MAC CE may be defined as follows (displayed from the highest order).
(1) Inter-UE Coordination (IUC) MAC CE
(2) Inter-UE Coordination (IUC) request MAC CE
(3) data from SCCH (sidelink control channel) (e.g., PC5-S message or PC5 RRC message)
(4) SL BFR MAC CE
(5) SL channel state information (CSI) reporting MAC CE
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order).
(1) SL BFR MAC CE
(2) Inter-UE Coordination (IUC) request MAC CE
(3) Inter-UE Coordination (IUC) MAC CE (alternatively, the priority order of IUC MAC CE may be the same as SCCH)
(4) data from SCCH (sidelink control channel) (e.g., PC5-S message or PC5 RRC message)
(5) SL channel state information (CSI) reporting MAC CE
(6) SL DRX Command MAC CE
(7) data of any sidelink traffic channel (STCH) (e.g., sidelink (SL) user data)

For example, according to the logical channel (LCH) priority of the SL BFR MAC CE proposed above, the logical channel prioritization (LCP) operation may be performed as follows.

For example, when the MAC entity of the UE has a plurality of MAC SDUs and MAC CEs for new transmission, the MAC entity may configure MAC PDU by selecting MAC SDU or MAC CE in the order of destinations with the highest priority of the logical channel (LCH) (e.g., based on/in accordance with the decreasing order of the sidelink LCH priority). For example, when the MAC entity of the UE has a plurality of MAC SDUs and MAC CEs as described below, the LCP operation (e.g., the operation of generating a MAC PDU) may be performed as follows according to the logical channel (LCH) priority of the SL BFR MAC CE proposed in the present disclosure.

For example, a MAC entity of the UE may have a plurality of MAC SDUs and MAC CEs as follows.
- data from sidelink control channel (SCCH) (e.g., PC5-S message or PC5 RRC message)
- SL BFR MAC CE
- Inter-UE Coordination (IUC) MAC CE message
- SL channel state information (CSI) reporting MAC CE

In this case, for example, according to the sidelink priority (or sidelink LCH priority) of the SL BFR MAC CE proposed in the present disclosure, the MAC entity may first fill an SDU for data of the sidelink control channel (SCCH) into a MAC PDU. And, for example, when space remains in the MAC PDU after filling the SDU for data of the SCCH into the MAC PDU, the MAC entity may fill the MAC PDU in the order of the SL BFR MAC CE, the Inter-UE Coordination (IUC) MAC CE, and the SL channel state information (CSI) reporting MAC CE. If, for example, all of the MAC SDU and MAC CEs (data from the SCCH, IUC MAC CE message, and SL CSI reporting MAC CE) cannot be filled into one MAC PDU, the MAC entity may fill the MAC SDU and the MAC CE into the MAC PDU in the sidelink priority order proposed in the present disclosure.

For example, a MAC entity of the UE may have a plurality of MAC SDUs and MAC CEs as follows.
- Inter-UE Coordination (IUC) MAC CE message
- SL channel state information (CSI) reporting MAC CE
- data from sidelink traffic channel (STCH) (e.g., sidelink (SL) user data)

In this case, for example, according to the sidelink priority (or sidelink LCH priority) of the SL BFR MAC CE proposed in the present disclosure, the MAC entity may first fill an Inter-UE Coordination (IUC) MAC CE message into a MAC PDU. And, for example, when space remains in the MAC PDU after filling the IUC MAC CE message into the MAC PDU, the MAC entity may fill the MAC PDU in the order of the SL channel state information (CSI) reporting MAC CE and a MAC SDU for data of the sidelink traffic channel (STCH). If, for example, all of the MAC CEs and MAC SDU (IUC MAC CE message, SL CSI reporting MAC CE, and data of the STCH) cannot be filled into one MAC PDU, the MAC entity may fill the MAC SDU and the MAC CE into the MAC PDU in the sidelink priority order proposed in the present disclosure.

According to an embodiment of the present disclosure, when the MAC entity of the UE has a plurality of MAC CEs, MAC SDUs, and an SL BFR MAC CE to be transmitted to counterpart destination UEs, the MAC entity may configure a MAC PDU by selecting a destination SDU or a destination MAC CE having the highest logical channel (LCH) priority based on the SL priority (or SL LCH priority) proposed in the present disclosure.

The embodiment(s) described above are only one embodiment, and the UE may perform an operation of configuring or generating a MAC PDU according to various priority orders for SL BFR MAC CE proposed in the present disclosure.

In another embodiment of the present disclosure, the following priority order may also be defined.

For example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL BFR MAC CE
(3) SL channel state information (CSI) reporting MAC CE
(4) Request-based Inter-UE Coordination (IUC) MAC CE (alternatively, the priority order of the request-based IUC MAC CE may be the same as that of the SL CSI reporting MAC CE, and may be higher than that of the SL DRX command MAC CE.)
(5) Condition-based Inter-UE Coordination (IUC) MAC CE (alternatively, the priority order of the condition-based IUC MAC CE may be the same as that of the SL CSI reporting MAC CE, and may be higher than that of the SL DRX command MAC CE. However, the priority order may be lower than that of the request-based IUC MAC CE.)
(6) Inter-UE Coordination (IUC) request MAC CE (e.g., MAC CE transmitted to request IUC MAC CE)
(7) SL DRX Command MAC CE
(8) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL BFR MAC CE
(4) Inter-UE Coordination (IUC) request MAC CE
(5) Request-based Inter-UE Coordination (IUC) MAC CE
(6) Condition-based Inter-UE Coordination (IUC) MAC CE
(7) SL DRX Command MAC CE
(8) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) Request-based Inter-UE Coordination (IUC) MAC CE = SL BFR MAC CE
(3) Condition-based Inter-UE Coordination (IUC) MAC CE = SL BFR MAC CE
(4) Inter-UE Coordination (IUC) request MAC CE = SL BFR MAC CE
(5) SL channel state information (CSI) reporting MAC CE
(6) SL DRX Command MAC CE
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) Inter-UE Coordination (IUC) request MAC CE
(3) Request-based Inter-UE Coordination (IUC) MAC CE message
(4) Condition-based Inter-UE Coordination (IUC) MAC CE message
(5) SL channel state information (CSI) reporting MAC CE
(6) SL BFR MAC CE
(7) SL DRX Command MAC CE
(8) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) Request-based Inter-UE Coordination (IUC) MAC CE (alternatively, the priority order of the IUC MAC CE may be the same as the SL DRX command MAC CE.)
(5) Condition-based Inter-UE Coordination (IUC) MAC CE (alternatively, the priority order of the IUC MAC CE may be the same as the SL DRX command MAC CE.)
(6) Inter-UE Coordination (IUC) request MAC CE
(7) SL BFR MAC CE
(8) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message) = SL BFR MAC CE
(2) SL channel state information (CSI) reporting MAC CE
(3) SL DRX Command MAC CE
(4) Inter-UE Coordination (IUC) request MAC CE
(5) Request-based Inter-UE Coordination (IUC) MAC CE (alternatively, the priority order of the IUC MAC CE may be the same as that of the sidelink traffic channel (STCH).)
(6) Condition-based Inter-UE Coordination (IUC) MAC CE (alternatively, the priority order of the IUC MAC CE may be the same as that of the sidelink traffic channel (STCH).)
(7) data of any sidelink traffic channel (STCH) (e.g., sidelink (SL) user data)

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) data of any sidelink traffic channel (STCH) (e.g., sidelink (SL) user data) = SL BFR MAC CE
(5) Request-based Inter-UE Coordination (IUC) MAC CE
(6) Condition-based Inter-UE Coordination (IUC) MAC CE
(7) Inter-UE Coordination (IUC) request MAC CE

Alternatively, for example, the sidelink priority of the SL BFR MAC CE may be defined as follows (displayed from the highest order. i.e., "data from SCCH" has the highest priority).
(1) data from SCCH (sidelink control channel) (e.g., PC5-S message or PC5 RRC message)
(2) SL channel state information (CSI) reporting MAC CE
(3) SL DRX Command MAC CE
(4) data of any sidelink traffic channel (STCH) (e.g., sidelink (SL) user data)
(5) SL BFR MAC CE
(6) Inter-UE Coordination (IUC) request MAC CE
(7) Request-based Inter-UE Coordination (IUC) MAC CE
(8) Condition-based Inter-UE Coordination (IUC) MAC CE

Alternatively, for example, the sidelink priority of the SL BFR MAC CE may be defined as follows (displayed from the highest order).
(1) Request-based Inter-UE Coordination (IUC) MAC CE
(2) Condition-based Inter-UE Coordination (IUC) MAC CE
(3) Inter-UE Coordination (IUC) request MAC CE
(4) data from SCCH (sidelink control channel) (e.g., PC5-S message or PC5 RRC message)
(5) SL channel state information (CSI) reporting MAC CE
(6) SL BFR MAC CE
(7) SL DRX Command MAC CE
(8) data of any sidelink traffic channel (STCH) (e.g., sidelink (SL) user data)

Alternatively, for example, the sidelink priority of the SL BFR MAC CE may be defined as follows (displayed from the highest order).
(1) Inter-UE Coordination (IUC) request MAC CE
(2) Request-based Inter-UE Coordination (IUC) MAC CE (alternatively, the priority order of the IUC MAC CE may be the same as that of the sidelink control channel (SCCH).)
(3) Condition-based Inter-UE Coordination (IUC) MAC CE (alternatively, the priority order of the IUC MAC CE may be the same as that of the sidelink control channel (SCCH).)
(4) data from SCCH (sidelink control channel) (e.g., PC5-S message or PC5 RRC message)
(5) SL channel state information (CSI) reporting MAC CE
(6) SL DRX Command MAC CE
(7) data of any sidelink traffic channel (STCH) (e.g., sidelink (SL) user data)
(8) SL BFR MAC CE

In addition, based on the sidelink priority value of the SL BFR MAC CE proposed in the present disclosure, uplink (UL)/sidelink (SL) prioritization (e.g., an operation of determining transmission priority when the UE has both uplink transmission and sidelink transmission simultaneously) may be performed. For example, the sidelink priority value of the SL BFR MAC CE may be configured as a fixed value "1".

The operation proposed in the present disclosure may be limitedly applied per PC5-RRC connection (or per SL unicast link, or per pair of L2 source (SRC)/destination (DST) ID per direction, or per direction per pair of L2 SRC/DST ID). Alternatively, for example, the operation may be limitedly applied per all PC5-RRC connections (or per all SL unicast links, or all pairs of L2 source (SRC)/destination (DST) ID).

In another embodiment of the present disclosure, the logical channel prioritization (LCP) order of a BFR MAC CE for reporting to the base station that sidelink (SL) beam failure recovery (BFR) has occurred is proposed as follows.

For example, logical channels may be prioritized in accordance with the following order (the highest priority is listed first).
- MAC CE for cell-radio network temporary identifier (C-RNTI), or data from uplink-common control channel (UL-CCCH);
- MAC CE for (enhanced) BFR, or MAC CE for Configured Grant Confirmation, or MAC CE for Multiple Entry Configured Grant Confirmation, or BFR MAC CE (e.g., MAC CE that indicates the occurrence of SL BFR to the base station by the UE);
- MAC CE for Sidelink Configured Grant Confirmation;
- MAC CE for listen before talk (LBT) failure;
- MAC CE for Timing Advance Report;
- MAC CE for SL-BSR prioritized according to clause 5.22.1.6;
- MAC CE for (extended) BSR, with exception of BSR included for padding;
- MAC CE for (enhanced) Single Entry power headroom report (PHR), or MAC CE for (enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (extended) Pre-emptive BSR;
- MAC CE for SL-BSR, with exception of SL- buffer status report (BSR) prioritized according to clause 5.22.1.6 and SL-BSR included for padding;
- MAC CE for integrated access and backhaul-mobile termination (IAB-MT) Recommended Beam Indication, or MAC CE for Desired IAB-MT power spectral density (PSD) range, or MAC CE for Desired downlink (DL) Tx Power Adjustment;
- data from any Logical Channel, except data from uplink-common control channel (UL-CCCH);
- MAC CE for Recommended bit rate query;
- MAC CE for BSR included for padding;
- MAC CE for SL-BSR included for padding;

NOTE: Prioritization among MAC CEs of same priority is up to UE implementation.

For example, the MAC entity may prioritize any MAC CEs listed in a higher order than 'data from any Logical Channel, except data from UL-CCCH' over NR sidelink transmission.

Alternatively, for example, logical channels may be prioritized in accordance with the following order (highest priority listed first).

MAC CE for cell-radio network temporary identifier (C-RNTI), or data from uplink-common control channel (UL-CCCH);
- MAC CE for (enhanced) BFR, or MAC CE for Configured Grant Confirmation, or MAC CE for Multiple Entry Configured Grant Confirmation;
- BFR MAC CE (e.g., MAC CE that indicates the occurrence of SL BFR to the base station by the UE);
- MAC CE for Sidelink Configured Grant Confirmation;
- MAC CE for listen before talk (LBT) failure;
- MAC CE for Timing Advance Report;
- MAC CE for SL-BSR prioritized according to clause 5.22.1.6;
- MAC CE for (extended) BSR, with exception of BSR included for padding;
- MAC CE for (enhanced) Single Entry power headroom report (PHR), or MAC CE for (enhanced) Multiple Entry PHR;
- MAC CE for Positioning Measurement Gap Activation/Deactivation Request;
- MAC CE for the number of Desired Guard Symbols;
- MAC CE for Case-6 Timing Request;
- MAC CE for (extended) Pre-emptive BSR;
- MAC CE for SL-BSR, with exception of SL- buffer status report (BSR) prioritized according to clause 5.22.1.6 and SL-BSR included for padding;
- MAC CE for integrated access and backhaul-mobile termination (IAB-MT) Recommended Beam Indication, or MAC CE for Desired IAB-MT power spectral density (PSD) range, or MAC CE for Desired downlink (DL) Tx Power Adjustment;
- data from any Logical Channel, except data from uplink-common control channel (UL-CCCH);
- MAC CE for Recommended bit rate query;
- MAC CE for BSR included for padding;
- MAC CE for SL-BSR included for padding;

NOTE: Prioritization among MAC CEs of same priority is up to UE implementation.

For example, the MAC entity may prioritize any MAC CE listed in a higher order than 'data from any Logical Channel, except data from UL-CCCH' over NR sidelink transmission.

In addition, based on the priority value of the BFR MAC CE proposed in the present disclosure (e.g., the MAC CE indicating occurrence of SL BFR to the base station), UL/SL prioritization (e.g., an operation of determining transmission priority when the UE has both uplink transmission and sidelink transmission simultaneously) may be performed. For example, the priority value of the BFR MAC CE may be configured as a fixed value "1".

In embodiments of the present disclosure, the beam management operation may be interpreted as being replaced by beam selection operation, spatial filter selection operation, beam pairing operation, spatial filter pairing operation, beam failure recovery operation, spatial filter recovery operation, beam sweeping operation, spatial filter sweeping operation, beam switching operation, spatial filter switching operation, measurement operation of reference signal (RS) resource, measurement report operation of reference signal (RS) resource, beam report operation, or spatial filter report operation, etc.

In embodiments of the present disclosure, transmission beam or reception beam information transmitted or received by the UE may be interpreted as being replaced by resource information of reference signal (RS) related to the transmission beam or resource information of reference signal (RS) related to the reception beam.

In embodiments of the present disclosure, direct communication request (DCR) and/or direct communication accept (DCA) message may be interpreted as being replaced by PC5-S DCR and/or PC5-S DCA message, etc.

In embodiments of the present disclosure, spatial setting and/or transmission configuration indication (TCI) information and/or quasi co location (QCL) information and/or beam may refer to each other, and may be interpreted as being replaced by beam-related information, beam direction or spatial domain transmission/reception filter.

In embodiments of the present disclosure, a beam may be interpreted as being replaced by a transmission beam, a reception beam, a spatial filter, a spatial transmission (TX) filter, a spatial domain transmission (TX) filter, a spatial reception (RX) filter, or a spatial domain reception (RX) filter.

In embodiments of the present disclosure, a transmission beam may be interpreted as being replaced by a spatial transmission (TX) filter or a spatial domain transmission (TX) filter.

In embodiments of the present disclosure, a reception beam may be interpreted as being replaced by a spatial reception (RX) filter or a spatial domain reception (RX) filter.

In embodiments of the present disclosure, that spatial setting information for transmission (or beam information) is same may mean that the spatial domain transmission (TX) filter of UE is same for two different transmission signals. In embodiments of the present disclosure, that spatial setting information (or beam information) for reception is same may means that the two different reception signals may have a QCL TypeD relationship and/or a relationship using a same spatial reception (RX) parameter.

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, a UE (e.g., TX UE) performing beam-based communication may select a transmission resource from a resource pool other than a resource pool in which a beam failure is detected when selecting transmission resources. Specifically, before information related to a candidate resource set is transferred from the PHY layer of the UE (e.g., TX UE) to the MAC layer of the UE (e.g., TX UE), information related to the beam in which the beam failure is detected is transferred from the PHY layer to the MAC layer, so that sensing (or measurement) may be performed for a resource pool excluding the resource pool related to the beam in which the beam failure is detected, and information related to the candidate resource set may be determined, and a resource (or grant) may be selected (or created) from the candidate resource set. In this case, for example, by considering information related to beam failure in addition to RSRP measurement information in the resource selection procedure, it may be possible to prevent unnecessary sensing (or measurement) procedures for a resource pool related to the beam in which the beam failure is detected. Alternatively, for example, unnecessary operations may be prevented from being performed so that the power of the UE may be efficiently used. Alternatively, for example, since a resource may be selected from a resource pool other than a resource pool related to the beam in which the beam failure is detected, the reliability of the selected resource may be improved. Alternatively, for example, since the selected resource is included in a resource pool that can utilize beams in which the beam failures is not detected, transmission through the selected resource may be guaranteed.

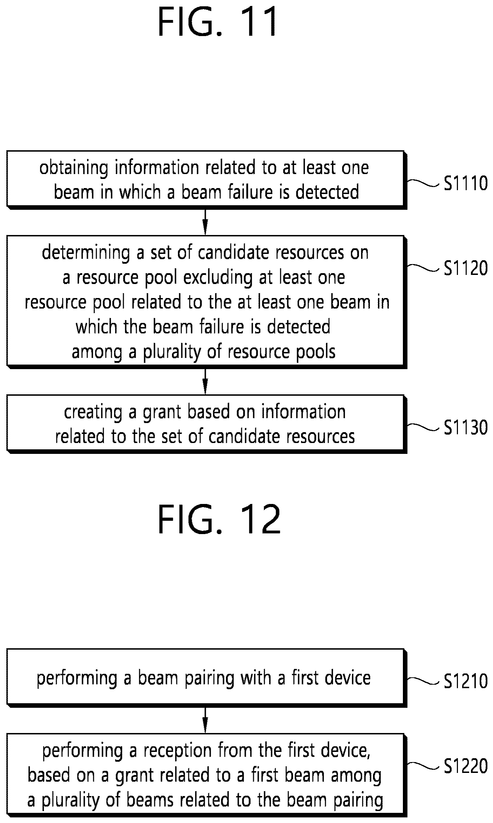

FIG. 11 shows a method for performing wireless communication by a first device, based on an embodiment of the present disclosure. The embodiment of FIG. 11 may be combined with various embodiments of the present disclosure.

Referring to FIG. 11, in step S1110, a first device may obtain information related to at least one beam in which a beam failure is detected. In step S1120, the first device may determine a set of candidate resources on a resource pool excluding at least one resource pool related to the at least one beam in which the beam failure is detected among a plurality of resource pools. In step S1130, the first device may create a grant based on information related to the set of candidate resources. For example, information related to the at least one beam in which the beam failure is detected may be transferred from a lower layer of the first device to a higher layer of the first device.

For example, the resource pool excluding the at least one resource pool related to the at least one beam in which the beam failure is detected among the plurality of resource pools may be selected at the higher layer of the first device.

For example, the at least one resource pool excluded from the plurality of resource pools may include at least one of (i) a resource related to the at least one beam in which the beam failure is detected, or (ii) a resource for reference signal (RS) related to the at least one beam in which the beam failure is detected.

For example, information related the resource pool excluding the at least one resource pool related to the at least one beam in which the beam failure is detected among the plurality of resource pools may be transferred from the higher layer of the first device to the lower layer of the first device.

For example, the set of candidate resources may be determined at the lower layer of the first device, based on information related the resource pool excluding the at least one resource pool related to the at least one beam in which the beam failure is detected among the plurality of resource pools.

Additionally, for example, the first device may perform a beam pairing with a second device. For example, information related to a plurality of beams related to the beam pairing may be transferred from the lower layer of the first device to the higher layer of the first device, and the information related to the plurality of beams may include at least one transmission parameter information related to the plurality of beams. For example, the at least one transmission parameter information may include information related to at least one of transmission priority, remaining packet delay budget (PDB), or a number of subchannels. For example, the set of candidate resources may be determined, by the lower layer of the first device, on the resource pool excluding the at least one resource pool related to the at least one beam in which the beam failure is detected among the plurality of resource pools, based on the at least one transmission parameter information related to the plurality of beams. For example, the set of candidate resources may be determined, by the lower layer of the first device, on the resource pool excluding the at least one resource pool related to the at least one beam in which the beam failure is detected among the plurality of resource pools, based on a beam covering the plurality of beams. For example, the at least one transmission parameter information may be based on a plurality of different transport blocks (TBs).

For example, based on physical feedback channel being used for a beam failure recovery (BFR) for the at least one beam in which the beam failure is detected, the physical feedback channel may be configured on a resource pool other than a resource pool including the grant among the plurality of resource pools.

For example, the beam failure may be detected based on at least one of block error rate (BLER), reference signal received power (RSRP), reference signal received quality (RSRQ), or received signal strength indicator (RSSI) related to the at least one beam.

For example, the higher layer of the first device may be a medium access control (MAC) layer of the first device, and the lower layer of the first device may be a physical (PHY) of the first device.

The proposed method may be applied to devices according to various embodiments of the present disclosure. First, a processor 102 of a first device 100 may obtain information related to at least one beam in which a beam failure is detected. And, the processor 102 of the first device 100 may determine a set of candidate resources on a resource pool excluding at least one resource pool related to the at least one beam in which the beam failure is detected among a plurality of resource pools. And, the processor 102 of the first device 100 may create a grant based on information related to the set of candidate resources. For example, information related to the at least one beam in which the beam failure is detected may be transferred from a lower layer of the first device to a higher layer of the first device.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

According to one embodiment of the present disclosure, provided is a non-transitory computer-readable storage medium recording instructions. For example, the instructions, based on being executed, cause a first device to perform operations comprising: obtaining information related to at least one beam in which a beam failure is detected; determining a set of candidate resources on a resource pool excluding at least one resource pool related to the at least one beam in which the beam failure is detected among a plurality of resource pools; and creating a grant based on information related to the set of candidate resources. For example, information related to the at least one beam in which the beam failure is detected may be transferred from a lower layer of the first device to a higher layer of the first device.

FIG. 12 shows a method for performing wireless communication by a second device, based on an embodiment of the present disclosure. The embodiment of FIG. 1q2 may be combined with various embodiments of the present disclosure.

Referring to FIG. 12, in step S1210, a second device may perform a beam pairing with a first device. In step S1220, the second device may perform a reception from the first device, based on a grant related to a first beam among a plurality of beams related to the beam pairing. For example, the first beam may be a beam excluding at least one beam in which a beam failure is detected among the plurality of beams, and the grant may be created based on information related to the at least one beam in which the beam failure is detected being transferred from a lower layer of the first device to a higher layer of the first device.

The proposed method may be applied to devices according to various embodiments of the present disclosure. First, a processor 202 of a second device 200 may perform a beam pairing with a first device And, the processor 202 of the second device 200 may control a transceiver 206 to perform a reception from the first device, based on a grant related to a first beam among a plurality of beams related to the beam pairing. For example, the first beam may be a beam excluding at least one beam in which a beam failure is detected among the plurality of beams, and the grant may be created based on information related to the at least one beam in which the beam failure is detected being transferred from a lower layer of the first device to a higher layer of the first device.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: performing a beam pairing with a first device; and performing a reception from the first device, based on a grant related to a first beam among a plurality of beams related to the beam pairing. For example, the first beam may be a beam excluding at least one beam in which a beam failure is detected among the plurality of beams, and the grant may be created based on information related to the at least one beam in which the beam failure is detected being transferred from a lower layer of the first device to a higher layer of the first device.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: performing a beam pairing with a first device; and performing a reception from the first device, based on a grant related to a first beam among a plurality of beams related to the beam pairing. For example, the first beam may be a beam excluding at least one beam in which a beam failure is detected among the plurality of beams, and the grant may be created based on information related to the at least one beam in which the beam failure is detected being transferred from a lower layer of the first device to a higher layer of the first device.

According to one embodiment of the present disclosure, provided is a non-transitory computer-readable storage medium recording instructions. For example, the instructions, based on being executed, cause a second device to perform operations comprising: performing a beam pairing with a first device; and performing a reception from the first device, based on a grant related to a first beam among a plurality of beams related to the beam pairing. For example, the first beam may be a beam excluding at least one beam in which a beam failure is detected among the plurality of beams, and the grant may be created based on information related to the at least one beam in which the beam failure is detected being transferred from a lower layer of the first device to a higher layer of the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

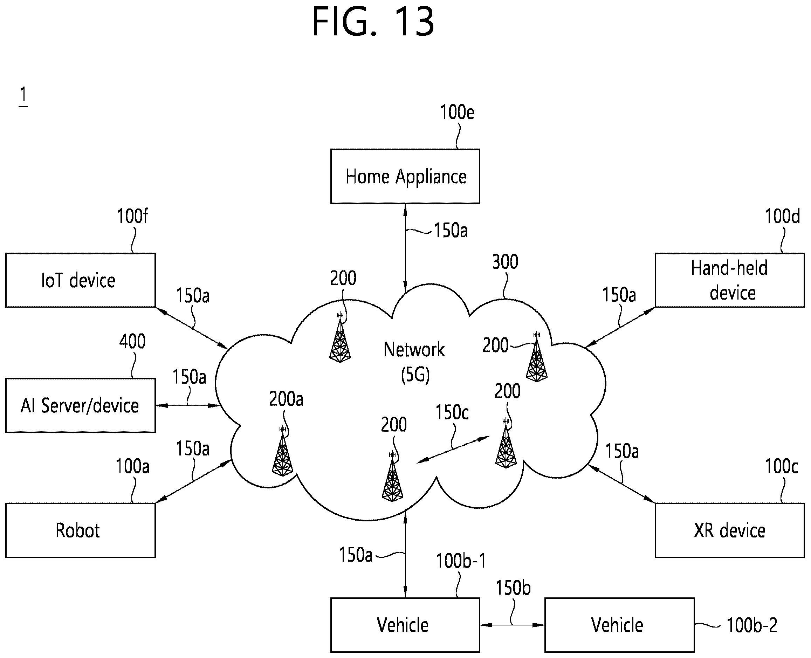

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

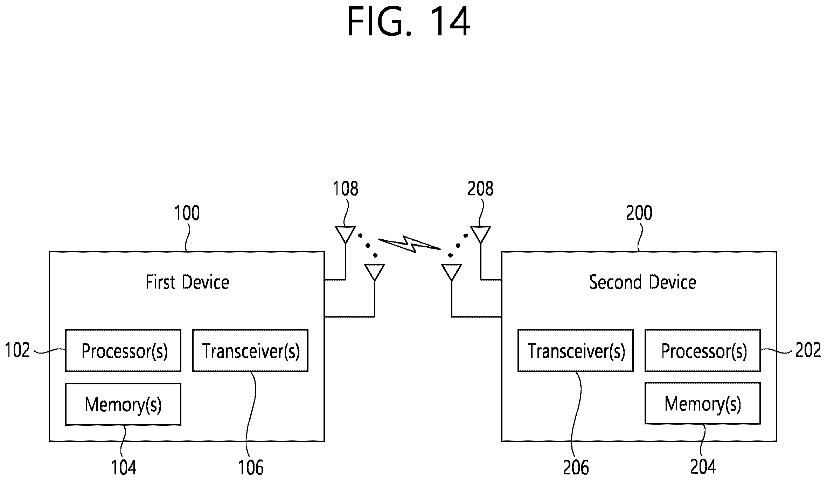

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

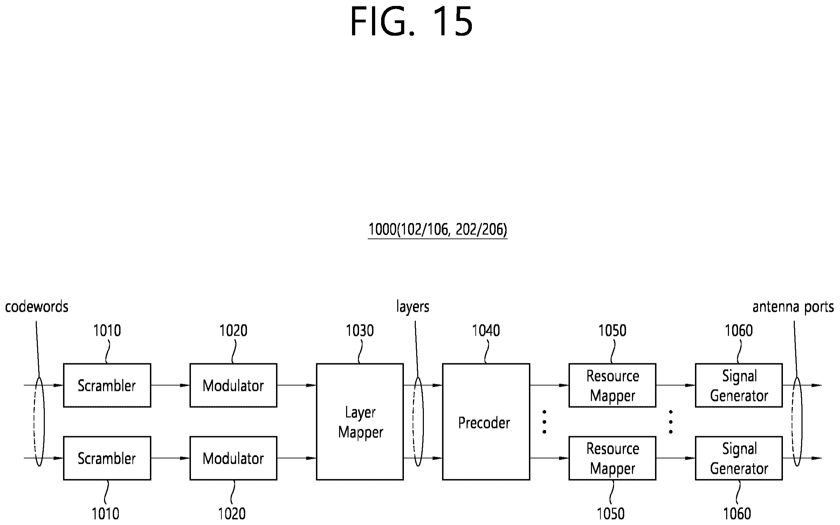

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

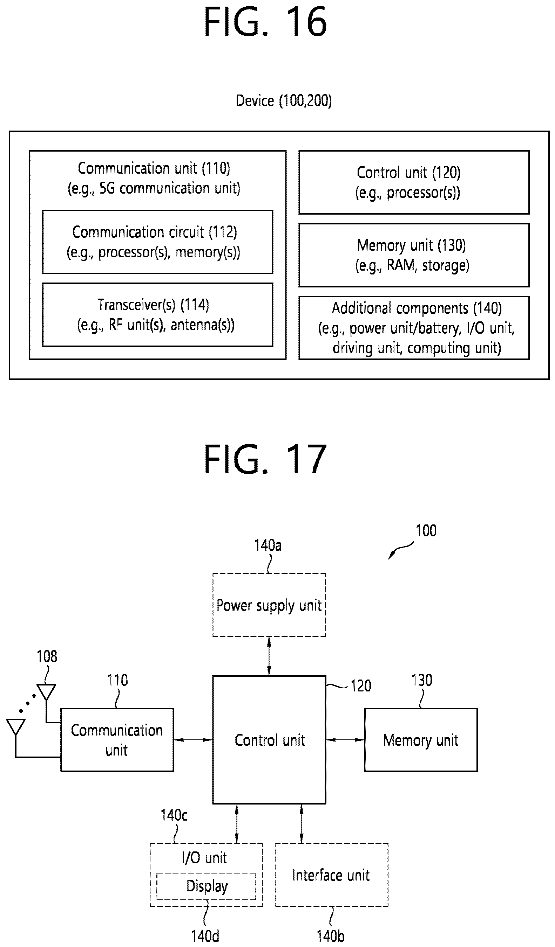

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

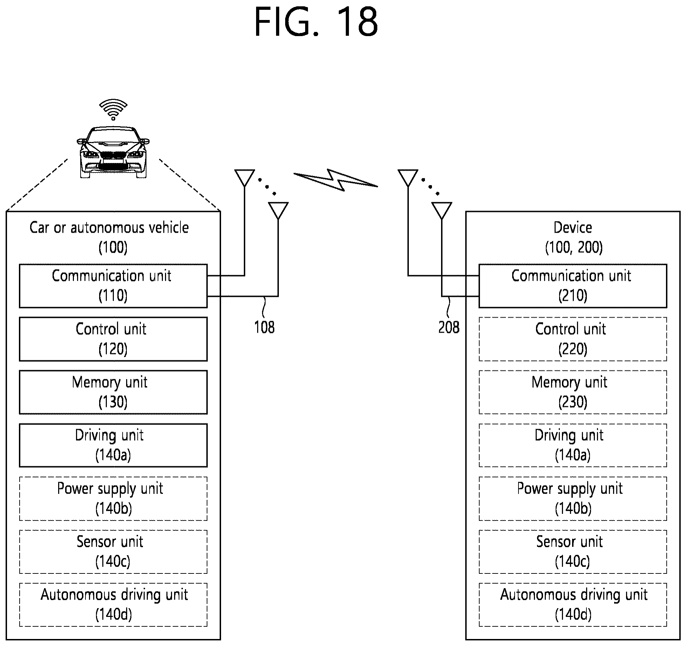

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information related to at least one beam in which a beam failure is detected;
determining a set of candidate resources on a resource pool excluding at least one resource pool related to the at least one beam in which the beam failure is detected among a plurality of resource pools; and
creating a grant based on information related to the set of candidate resources,
wherein information related to the at least one beam in which the beam failure is detected is transferred from a lower layer of the first device to a higher layer of the first device.

2. The method of claim 1, wherein the resource pool excluding the at least one resource pool related to the at least one beam in which the beam failure is detected among the plurality of resource pools is selected at the higher layer of the first device.

3. The method of claim 1, wherein the at least one resource pool excluded from the plurality of resource pools includes at least one of (i) a resource related to the at least one beam in which the beam failure is detected, or (ii) a resource for reference signal (RS) related to the at least one beam in which the beam failure is detected.

4. The method of claim 1, wherein information related the resource pool excluding the at least one resource pool related to the at least one beam in which the beam failure is detected among the plurality of resource pools is transferred from the higher layer of the first device to the lower layer of the first device.

5. The method of claim 1, wherein the set of candidate resources is determined at the lower layer of the first device, based on information related the resource pool excluding the at least one resource pool related to the at least one beam in which the beam failure is detected among the plurality of resource pools.

6. The method of claim 1, further comprising:
performing a beam pairing with a second device,
wherein information related to a plurality of beams related to the beam pairing is transferred from the lower layer of the first device to the higher layer of the first device, and
wherein the information related to the plurality of beams includes at least one transmission parameter information related to the plurality of beams.

7. The method of claim 6, wherein the at least one transmission parameter information includes information related to at least one of transmission priority, remaining packet delay budget (PDB), or a number of subchannels.

8. The method of claim 6, wherein the set of candidate resources is determined, by the lower layer of the first device, on the resource pool excluding the at least one resource pool related to the at least one beam in which the beam failure is detected among the plurality of resource pools, based on the at least one transmission parameter information related to the plurality of beams.

9. The method of claim 6, wherein the set of candidate resources is determined, by the lower layer of the first device, on the resource pool excluding the at least one resource pool related to the at least one beam in which the beam failure is detected among the plurality of resource pools, based on a beam covering the plurality of beams.

10. The method of claim 6, wherein the at least one transmission parameter information is based on a plurality of different transport blocks (TBs).

11. The method of claim 1, wherein, based on physical feedback channel being used for a beam failure recovery (BFR) for the at least one beam in which the beam failure is detected, the physical feedback channel is configured on a resource pool other than a resource pool including the grant among the plurality of resource pools.

12. The method of claim 1, wherein the beam failure is detected based on at least one of block error rate (BLER), reference signal received power (RSRP), reference signal received quality (RSRQ), or received signal strength indicator (RSSI) related to the at least one beam.

13. The method of claim 1, wherein the higher layer of the first device is a medium access control (MAC) layer of the first device, and
wherein the lower layer of the first device is a physical (PHY) of the first device.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining information related to at least one beam in which a beam failure is detected;
determining a set of candidate resources on a resource pool excluding at least one resource pool related to the at least one beam in which the beam failure is detected among a plurality of resource pools; and
creating a grant based on information related to the set of candidate resources,
wherein information related to the at least one beam in which the beam failure is detected is transferred from a lower layer of the first device to a higher layer of the first device.

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining information related to at least one beam in which a beam failure is detected;
determining a set of candidate resources on a resource pool excluding at least one resource pool related to the at least one beam in which the beam failure is detected among a plurality of resource pools; and
creating a grant based on information related to the set of candidate resources,
wherein information related to the at least one beam in which the beam failure is detected is transferred from a lower layer of the first device to a higher layer of the first device.

16. A non-transitory computer-readable storage medium recording instructions, the instruction, when executed, cause a first device to perform operations comprising:
obtaining information related to at least one beam in which a beam failure is detected;
determining a set of candidate resources on a resource pool excluding at least one resource pool related to the at least one beam in which the beam failure is detected among a plurality of resource pools; and
creating a grant based on information related to the set of candidate resources,
wherein information related to the at least one beam in which the beam failure is detected is transferred from a lower layer of the first device to a higher layer of the first device.

17. A method for performing wireless communication by a second device, the method comprising:
performing a beam pairing with a first device; and
performing a reception from the first device, based on a grant related to a first beam among a plurality of beams related to the beam pairing,
wherein the first beam is a beam excluding at least one beam in which a beam failure is detected among the plurality of beams, and
wherein the grant is created based on information related to the at least one beam in which the beam failure is detected being transferred from a lower layer of the first device to a higher layer of the first device.

18. A second device adapted to perform wireless communication, the second device comprising:
at least one transceiver;
at least one processor; and
at least one memory connected to the at least one processor and storing instructions that, based on being executed, cause the second device to perform operations comprising:
performing a beam pairing with a first device; and
performing a reception from the first device, based on a grant related to a first beam among a plurality of beams related to the beam pairing,
wherein the first beam is a beam excluding at least one beam in which a beam failure is detected among the plurality of beams, and
wherein the grant is created based on information related to the at least one beam in which the beam failure is detected being transferred from a lower layer of the first device to a higher layer of the first device.

19. A processing device adapted to control a second device to perform wireless communication, the processing device comprising:
at least one processor; and
at least one memory connected to the at least one processor and storing instructions that, based on being executed, cause the at least one processor to perform operations comprising:
performing a beam pairing with a first device; and
performing a reception from the first device, based on a grant related to a first beam among a plurality of beams related to the beam pairing,
wherein the first beam is a beam excluding at least one beam in which a beam failure is detected among the plurality of beams, and
wherein the grant is created based on information related to the at least one beam in which the beam failure is detected being transferred from a lower layer of the first device to a higher layer of the first device.

20. A non-transitory computer-readable storage medium recording instructions, the instruction, when executed, cause a second device to perform operations comprising:
performing a beam pairing with a first device; and
performing a reception from the first device, based on a grant related to a first beam among a plurality of beams related to the beam pairing,
wherein the first beam is a beam excluding at least one beam in which a beam failure is detected among the plurality of beams, and
wherein the grant is created based on information related to the at least one beam in which the beam failure is detected being transferred from a lower layer of the first device to a higher layer of the first device.
